# EUROPEAN PATENT APPLICATION

(11) **EP 3 656 743 A1**
(43) Date of publication of application: **27.05.2020**
(21) Application number: 19205765.1
(22) Date of filing: 28.10.2019
(51) Int. Cl.: C02F 1/28, C02F 1/72, C02F 1/76, C02F 1/02, C02F 1/66

(54) **WASTEWATER TREATMENT SYSTEM AND METHOD WITH CATALYSTS**

(30) Priority: 21.11.2018 TW 107141408
(71) Applicant: NAN YU CATALYTIC CO., LTD., Hsin Chu City (TW)
(72) Inventor: CHEN, Chien-An, Hsin Chu City (TW); CHEN, Yi-Wen, Hsin Chu City (TW)
(74) Representative: Lang, Christian

(57) **Abstract**

The present invention provides a wastewater treatment system which comprises a liquid oxidation promoter, a fixed bed oxidation adsorption device, a plurality of catalysts and an aeration oxidation device. The catalysts comprise activated carbon, transition metal and precious metal. The precious metal is bonded to the activated carbon via the transition metal. The aeration oxidation device is connected to the fixed bed oxidation adsorption device. The catalysts, the liquid oxidation promoter, oxidizing gas, and wastewater having a COD concentration higher than a predetermined concentration are fed into the aeration oxidation device, and the COD in the wastewater is oxidized in the presence of the oxidizing gas and the catalysts so that the COD concentration of the wastewater is reduced to the predetermined concentration. The fixed bed oxidation adsorption device comprises a first oxidation adsorption tower for receiving the wastewater containing the predetermined concentration of the COD. The catalysts are fed into the first adsorption oxidation tower so that adsorption and oxidation reactions are performed on the wastewater to further reduce the COD concentration of the wastewater and to recycle the catalysts.

## Description

### BACKGROUND OF THE INVENTION

### Field of the Invention

The invention relates to a wastewater treatment system and method with catalysts, and more particularly to a wastewater treatment system and method for decomposing organic material and/or inorganic COD components in wastewater by using catalyst.

### Related Art

Wastewater treatment methods are generally classified into primary treatment, secondary treatment, and tertiary treatment. The primary treatment includes, for example, a sedimentation method, etc., which removes solid waste, oil, sand, hard particles, and other sedimentable substances in wastewater. The secondary treatment begins to deal with chemical oxygen demand chemical oxygen demand (COD) and decomposes organic compounds in wastewater into inorganic substances, generally by using aeration and biological treatments. The tertiary treatment uses activated carbon to eliminate of toxins. The tertiary treatment, the process after the secondary treatment, is mainly to denitrify and dephosphorize the water after the secondary treatment, removes the residual pollutants in the water by using activated carbon adsorption or reverse osmosis, and kills bacteria and viruses by using ozone or chlorine disinfection. Further, at present, the known wastewater treatment methods include an activated sludge method, a biological treatment method, a combustion treatment method by sintering and a catalystless wet oxidation treatment method by the Zimmerman process.

The biological treatment method takes a long time to decompose organic matter, etc. As for the treatment of nitrogen compounds containing the compounds that is difficult to decompose such as ammonia, it requires complicated engineering processes. It is necessary to dilute the concentration of the wastewater and adjust the pH of the wastewater to levels suitable for the growth of microorganisms such as algae, bacteria, and the like, which requires equipment having a large space or area for processing. The combustion treatment requires fuel, so it has a cost problem. It also has shortcomings of discharging gas causing secondary pollution. The catalystless wet oxidation treatment is a method in which wastewater is treated in the presence of oxygen under high temperature and high pressure to oxidize or decompose organic substances and/or inorganic COD components, etc. Although it is an excellent treatment, but usually its efficiency is low. In addition, it also needs to build additional equipment for secondary processing.

In view of this, many studies have been conducted to improve the processing efficiency of the wet oxidation treatment method, and various methods of using catalysts have been proposed. From the viewpoints of high purification of wastewater and economic efficiency, the wet oxidation treatment using solid catalysts has been attracting attention. A catalyst formed by placing precious metal such as palladium or platinum on a carrier such as alumina, silica, silica gel or activated carbon is proposed in Japanese Laid-Open Patent Publications No. S49-94556 and S49-94157. Taiwan Patent Application No. 083112298 proposes a catalyst mixture comprising a manganese oxide and an oxide of at least one metal selected from the group consisting of iron, titanium and zirconium. However, the known wet oxidation treatment needs to be carried out under high pressure and high temperature, which increases the energy consumption required for pressurization and heating, and increases the cost of wastewater treatment.

However, the above-mentioned wastewater treatment with catalysts still can be improved.

### SUMMARY OF THE INVENTION

An object of an embodiment of the present invention is to provide a wastewater treatment system and method which utilize catalysts for wastewater treatment.

According to one embodiment of the present invention, a wastewater treatment system comprises a liquid oxidation promoter, a plurality of catalysts, a fixed bed oxidation adsorption device and an aeration oxidation device. The catalysts comprise activated carbon, transition metal and precious metal. The precious metal is bonded to the activated carbon via the transition metal. The aeration oxidation device is connected to the fixed bed oxidation adsorption device. The catalysts, the liquid oxidation promoter, oxidizing gas, and wastewater having a COD concentration higher than a predetermined concentration are fed into the aeration oxidation device, and the COD in the wastewater is oxidized in the presence of the oxidizing gas and the catalysts so that the COD concentration of the wastewater is reduced to the predetermined concentration. The fixed bed oxidation adsorption device comprises a first oxidation adsorption tower for receiving the wastewater containing the predetermined concentration of the COD. The catalysts are fed into the first adsorption oxidation tower so that adsorption and oxidation reactions are performed on the wastewater to further reduce the COD concentration of the wastewater and to recycle the catalysts.

In one embodiment, the fixed bed oxidation adsorption device further comprises: a plurality of switch valves; a second oxidation adsorption tower; and a third oxidation adsorption tower. The switch valves are disposed between two of the first oxidation adsorption tower, the second oxidation adsorption tower and the third oxidation adsorption tower, so that when the first and second oxidation adsorption towers perform the adsorption and oxidation reaction, the third oxidation adsorption tower performs a regeneration reaction.

In one embodiment, the wastewater treatment system further comprises an adjusting container which comprises a first inflow line, a second inflow line, a discharge line and a body. The first inflow line is used for introducing the liquid oxidation promoter. The second inflow line is used for introducing the wastewater having a COD concentration higher than the predetermined concentration. The discharge line is used for discharging the adjusted wastewater. The body connected to the first inflow line, the second inflow line and the discharge line is used for storing the wastewater and mixing the liquid oxidation promoter into the wastewater.

In one embodiment, the transition metal is manganese. The precious metal is ruthenium. The oxidation gas is air, and the liquid oxidation promoter is bleaching water.

In one embodiment, the aeration oxidation device further includes a sedimentation tank for recycling the catalysts.

According to an embodiment of the invention, a wastewater treatment method comprising: providing a plurality of catalysts, wherein the catalysts comprise activated carbon, transition metal and precious metal, wherein the precious metal is bonded to the activated carbon via the transition metal; providing a liquid oxidation promoter; feeding the catalysts, the liquid oxidation promoter, oxidizing gas, and wastewater into an aeration oxidation device, wherein the COD concentration of the wastewater is higher than a predetermined concentration, and the COD in the wastewater is oxidized in the presence of the oxidizing gas and the catalysts so that the COD concentration of the wastewater is reduced to the predetermined concentration; feeding the wastewater containing the predetermined concentration of the COD and the catalysts into a fixed bed oxidation adsorption device so that adsorption and oxidation reactions are performed on the wastewater to further reduce the COD concentration of the wastewater and the catalysts are recycled at the fixed bed oxidation adsorption device.

In an embodiment, the wastewater treatment method further comprises the step of feeding a liquid oxidation promoter and the wastewater into an adjusting container and mixing the liquid oxidation promoter into the wastewater.

In an embodiment, the wastewater treatment method further comprises the step of feeding the catalysts and an activating agent into a reactor so that the catalysts are activated.

In one embodiment, the aeration oxidation device is connected between the adjusting container and the fixed bed oxidation adsorption device, and the wastewater is introduced into the aeration oxidation device from the adjusting container.

In an embodiment, the wastewater treatment method further comprises the step of recycling the catalysts at a sedimentation tank of the aeration oxidation device.

In one embodiment, the transition metal is manganese. The precious metal is ruthenium. The oxidation gas is air, and the liquid oxidation promoter is bleaching water.

According to an embodiment of the present invention, the wastewater treatment system and method have a faster reaction rate than the known biological treatment, require a smaller space in which equipment is built, and no sludge is generated. In one embodiment, not only the COD of the wastewater is reduced, but also the wastewater is decolorized. In addition, ammonia nitrogen may also be reduced to below 1ppm.

### BRIEF DESCRIPTION OF THE DRAWINGS

FIG. 1A is a schematic view of a wastewater treatment system in accordance with an embodiment of the present invention.
FIG. 1B is a schematic view of wastewater treatment equipment according to an embodiment of the present invention.
FIG. 2 is a schematic view of an adjusting container according to an embodiment of the present invention.
FIG. 3 is a schematic view of an aeration oxidation device according to an embodiment of the present invention.
FIG. 4 is a schematic view of an aeration oxidation apparatus which is continuously operated according to another embodiment of the present invention.

### DETAILED DESCRIPTION OF THE INVENTION

### Example 1: System of Primary Wastewater Treatment for COD

An example of wastewater treatment of a fixed bed oxidation adsorption device using air and catalysts at one stage will be described below. Taking oxidation of 1000 tons/day of industrial wastewater in the present of air at one stage as an example, the following steps are included. (1). Providing at least one oxidation adsorption tower of 2.5m³, in this embodiment for example, four oxidation adsorption towers 111-114, and feeding 2.2m³ of the ruthenium-manganese activated carbon catalysts (ruthenium-manganese catalysts carried on activated carbon) in the oxidation adsorption towers 111-114. (2). Introducing the treated wastewater having 200ppm of the COD at room temperature, from the adjusting container 120, into the oxidation adsorption towers 111-114, and oxidizing and adsorbing the organic components in the treated wastewater in conditions of atmospheric pressure, a temperature of 40 °C and pH=6-7. (3). Introducing the treated wastewater successively into three of the oxidation adsorption towers 111-114 to reduce the COD concentration, so that the other tower of the oxidation adsorption towers 111-114 may be regenerated, thereby increasing the processing speed and life. (4). After the oxidation and adsorption reaction, the COD of the industrial wastewater can be reduced from 200ppm to 50ppm which meets the discharge criterion, and then the industrial wastewater is discharged into a discharge tank. The wastewater treatment according to this embodiment can reach the standard of tertiary treatment.

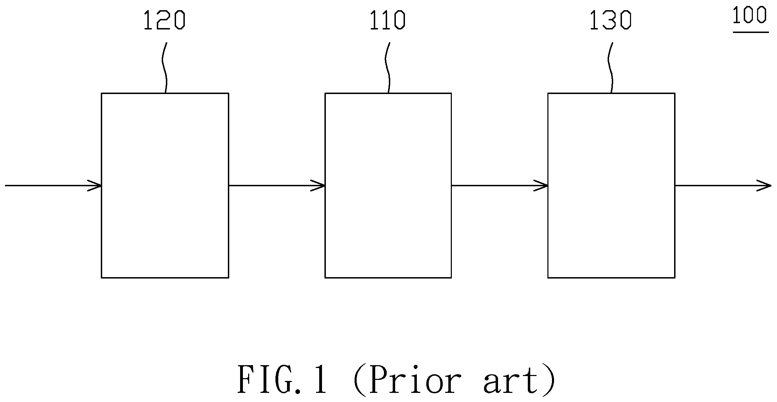

In more detail, in one embodiment, the primary treatment includes both oxidation and adsorption treatments. FIG. 1A is a schematic view of a wastewater treatment system in accordance with an embodiment of the present invention. FIG. 1B is schematic view of a wastewater treatment equipment according to an embodiment of the present invention. As shown in FIGs 1A and 1B, the wastewater treatment system 100 includes an aeration oxidation device 130 and a fixed bed oxidation adsorption device 110. The fixed bed oxidation adsorption device 110 includes at least one oxidation adsorption tower, in this embodiment for example, four oxidation adsorption towers 111-114; and a plurality of switch valves 115. In an embodiment, the wastewater treatment system 100 can further include an adjusting container 120.

The adjusting container 120 is configured to perform a pretreatment step of the oxidation adsorption towers by use of air and catalysts at one stage. More specifically, an adjusting container 120 of 20m³ is constructed. Wastewater with a COD concentration of 200ppm and liquid oxidation promoter of 250ppm are added into the adjusting container 120. The pH value of the wastewater is adjusted to the pH 7-9 and then air at room temperature is fed and stirred into the adjusting container 120. The liquid oxidation promoter may be, for example, bleaching water. In one embodiment, the component of the bleaching water may be sodium hypochlorite, calcium hypochlorite (Ca(ClO)₂) or calcium hypochlorite chloride (Ca(CIO)CI) and the like. When its COD concentration exceeds 200ppm, the wastewater may be diluted or treaded by other methods (such as, example 2 which will be described later), so that the COD concentration are reduced to 200ppm. When the pH is 7-9, the activity of the catalysts is relatively strong.

The bleaching water can oxidize the COD, whose activity is equivalent to hexavalent chromium, and thus it can be used instead of hexavalent chromium. The catalysts include not only activated carbon but also a layer of precious metal coated on the activated carbon. More specifically, the trivalent ruthenium (not easily soluble in water) in the catalysts can be oxidized by the bleaching water to hexavalent ruthenium (soluble in water), thereby reducing the used amount of ruthenium.

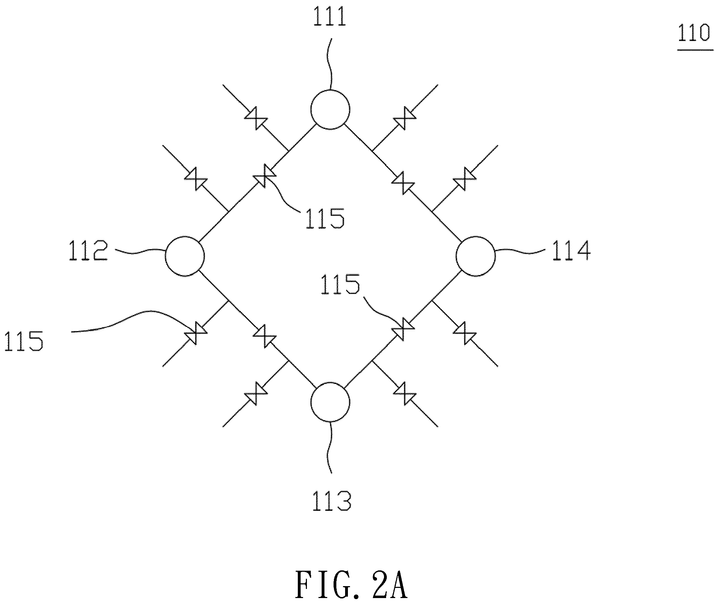

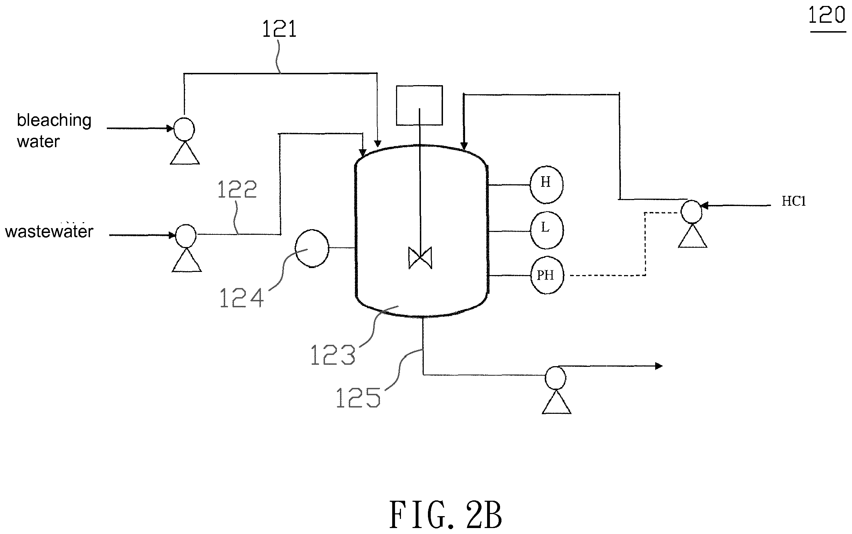

FIG. 2 is a schematic view of an adjusting container according to an embodiment of the present invention. As shown in FIG. 2, the adjusting container 120 which comprises a first inflow line 121, a second inflow line 122, a discharge line 125 and a body 123. The first inflow line 121 is used for introducing the bleaching water. The second inflow line 122 is used for introducing the wastewater. The discharge line 125 is used for discharging the adjusted wastewater. The body 123 connected to the first inflow line 121, the second inflow line 122 and the discharge line 125 is used for storing and processing the wastewater. In one embodiment, the adjusting container 120 may further comprise a bleaching water meter 124 for detecting the bleaching water concentration of the liquid stored in the adjusting container 120. In one embodiment, the adjusting container 120 may further include a high level gauge H and a low level gauge L for detecting the level of the liquid stored in the adjusting container 120. In one embodiment, the adjusting container 120 may further comprise a pH measuring apparatus PH for detecting the pH value of the liquid stored in the adjusting container 120. When the liquid stored in the adjusting container 120 has a pH value not within the predetermined range, the hydrochloride HCL was added into adjusting container 120 through a conduit 129.

As shown in FIG. 1B, the fixed bed oxidation adsorption device 110, from adjusting container 120, received wastewater after adjustment for conducting the oxidation and adsorption treatment on the wastewater. In this embodiment, the fixed bed oxidation adsorption device 110 includes four towers, first to fourth oxidation adsorption towers 111-114, and a plurality of switch valves 115 connected between the oxidation adsorption towers 111-114. Preferably, during operation, three oxidation adsorption towers conduct adsorption by use of activated carbon, and an oxidation adsorption tower conduct a catalyst recovery process. In one embodiment, about 2.2 cubic meters of catalysts per tower are used. More specifically, as shown in FIG. 1B, firstly the wastewater is fed into the first oxidation adsorption tower 111. When the catalysts of the first oxidation adsorption tower 111 is in a saturation state, the switch valves 115 are switched in a way that the wastewater may be fed into the secondary, third and fourth oxidation adsorption towers 112, 113 and 114, so that the first oxidation adsorption tower 111 can conduct a regeneration process. When the catalysts of the secondary oxidation adsorption tower 112 is in a saturation state, the switch valves 115 are switched in a way that the wastewater may be fed into the third, fourth and first oxidation adsorption towers 113, 114 and 111, so that the secondary oxidation adsorption tower 112 can conduct a regeneration process. When the catalysts of the third oxidation adsorption tower 113 is in a saturation state, the switch valves 115 are switched in a way that the wastewater may be fed into the fourth, first and secondary oxidation adsorption towers 114, 111 and 112, so that the third oxidation adsorption tower 113 can conduct a regeneration process. When the catalysts of the fourth oxidation adsorption tower 114 is in a saturation state, the switch valves 115 are switched in a way that the wastewater may be fed into the first, secondary and third oxidation adsorption towers 111, 112 and 113, so that the fourth oxidation adsorption tower 114 can conduct a regeneration process.

The fixed bed oxidation adsorption device 110 completes the adsorption and oxidation of the wastewater, and the COD concentration of the oxidized wastewater can be reduced from 200 ppm to 50 ppm, which has met the discharge standard. Finally, the oxidized wastewater is discharged to a discharge tank.

### Example 2: System of Secondary Wastewater Treatment for COD

As shown in FIG. 1A, the wastewater treatment system 100 comprises a fixed bed oxidation adsorption device 110, an adjusting container 120 and an aeration oxidation device 130, whereby the secondary processing may be conducted. The following is an example of the pretreatment step of the wastewater treatment in the aeration oxidation device by use of air, the bleaching water and the catalysts. Taking 1000 tons/day of industrial wastewater as an example, the following steps are included. An adjusting container 120 of 20 m³ is provided and the wastewater as well as 500 ppm of the bleaching water is fed into the adjusting container 120. The pH value of the wastewater is adjusted to the pH 7-9 and then air at room temperature is fed into and stirred in the adjusting container 120. Further, in the first stage, under atmospheric pressure, at a temperature of 80°C and the pH=7-9, aeration of wastewater for oxidation is performed. In one embodiment of the present invention, when ruthenium is used as the precious metal, the first stage is required to be carried out at 80°C. When platinum is used as the precious metal, the first stage is only required to be carried out at room temperature. Further, the reaction temperature may be about 60-100°C, preferably of 70-90°C. The dissolved oxygen in the water is too low when the reaction temperature is above 100°C. Considering the amount of dissolved oxygen in the wastewater, 60-80°C is preferred, preferably 60°C. However, when the wastewater contains organic substances such as resins, the activated carbon is easily blocked and loses activity. When the temperature is low, the reaction rate is slow. Therefore, when the wastewater contains a resin, the reaction temperature may be set to be 75-100°C since the resin can be effectively carbonized without deactivating the activated carbon. However, the higher the temperature is, the lower the dissolved oxygen is in the water. Accordingly, the reaction temperature is preferably 75-80 °C . In the second stage, oxidation and adsorption of the wastewater are carried out under atmospheric pressure, at the temperature of 40°C and pH=6-7, so as to reduce the COD concentration of the wastewater. Then, the catalysts dissolved in water is recycled at the second stage. According to this embodiment, the catalysts is recycled at a sedimentation tank 132 of the aeration oxidation device 130. In addition, the catalysts may further be recycled at the fixed bed oxidation adsorption device 110. Therefore, the concentration of ruthenium in the wastewater for discharging can be lowered to 10ppb or less, thereby reducing the lost amount of ruthenium as well as the cost of wastewater treatment.

Next, an example of wastewater treatment of the aeration oxidation device using air, catalysts and bleaching water at two stages will be described below. Take 1000 tons/day of industrial wastewater as an example. (1). An aeration oxidation tower 130 with a volume of 25m³ is provided and 5m³ of ruthenium-manganese activated carbon catalysts are fed into the aeration oxidation tower 130. (2). 500ppm of bleaching water are fed into the aeration oxidation device 130 to oxidize the wastewater. The wastewater is heated to 80°C. The aeration oxidation device 130 is fed with air so that the continuous reaction is performed by use of air and the ruthenium-manganese activated carbon catalysts (ruthenium-manganese catalysts carried on activated carbon). (3). The COD concentration of the industrial wastewater after the reaction can be reduced from 500 ppm to 200 ppm at first stage. Then, the wastewater is fed the fixed bed oxidation adsorption device 110 to be processed at the second stage (for example, the embodiment of Fig. 1B). the trivalent ruthenium (not easily soluble in water) in the catalysts can be oxidized by the bleaching water to hexavalent ruthenium (soluble in water), thereby reducing the used amount of ruthenium. In addition, after the bleaching water is reduced to sodium chloride, the sodium chloride is easily returned to the bleaching water by the dissolved oxygen in the water, so the lost amount of the bleaching water is substantially small. In addition, the bleaching water also can be recycled and reused many times to reduce the cost and consumption of bleaching water.

Take 1000 tons/day of industrial wastewater being oxidized by air in the fixed bed oxidation adsorption device 110 as an example. (1). 2.5 m³ of at least one oxidation adsorption tower is provided and 2.2m³ of the ruthenium-manganese activated carbon catalysts are fed into the at least one oxidation adsorption tower. (2). The treated wastewater having 200ppm of the COD concentration at room temperature is fed into the at least one oxidation adsorption tower, and then the oxidation and adsorption process are performed. (3). In one embodiment, the treated wastewater is successively fed into three oxidation adsorption towers to reduce the COD concentration. (4). After the oxidation and adsorption reaction, the COD concentration of the industrial wastewater can be reduced from 200ppm to 50ppm which meets the discharge criterion. The wastewater treatment according to this embodiment can reach the standard of tertiary treatment.

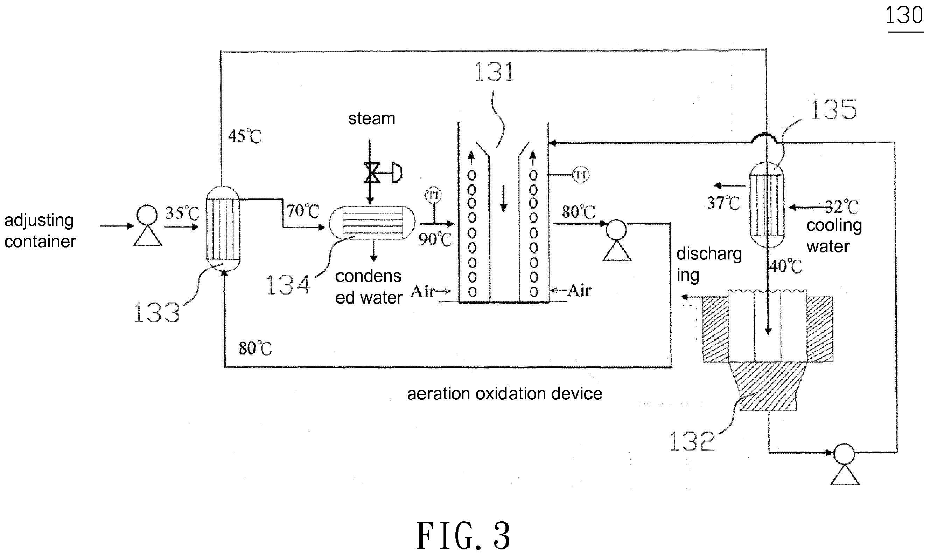

FIG. 3 is a schematic view of an aeration oxidation device according to an embodiment of the present invention. As shown in FIG. 3, the aeration oxidation device 130 includes an aeration oxidation tower 131, a sedimentation tank 132, a heat exchanger 133, and a heater 134. In an embodiment, the aeration oxidation device 130 may further include a thermometer TI. The heat exchanger 133 communicates to the adjusting container 120 and the aeration oxidation tower 131, so as to receive the adjusted wastewater at about 35°C from the adjusting container 120 and the oxidized wastewater at about 80 °C from the aeration oxidation tower 131. The two kinds of wastewater do heat exchange with each other so that the adjusted wastewater is heated to 70°C and the oxidized wastewater is cooled to 45 °C. The heater 134 is in communication with the heat exchanger 133 for receiving the adjusted wastewater of about 70°C which is heated by the heater 134 to about 90°C with an external vapor and then passed to the aeration oxidation tower 131. The aeration oxidation tower 131 is supplied with air from the bottom thereof, and the adjusted wastewater is oxidized, then discharged. The adjusted wastewater is passed through the heat exchanger 133 and introduced into the sedimentation tank 132. The catalysts are precipitated at the sedimentation tank 132 and are recycled. Finally, the recycled catalysts are introduced into the aeration oxidation tower 131, and the catalyst-free wastewater is discharged. In one embodiment, it can be discharged into the fixed bed oxidation adsorption unit 110 for tertiary treatment of wastewater.

In an embodiment, the aeration oxidation device 130 further includes another heat exchanger 135. The another heat exchanger 135 is used to cool the oxidized wastewater of about 45°C to 40°C with a cooling water, then introduce it into the sedimentation tank 132. The cooling water is heated from about 32°C to about 37°C.

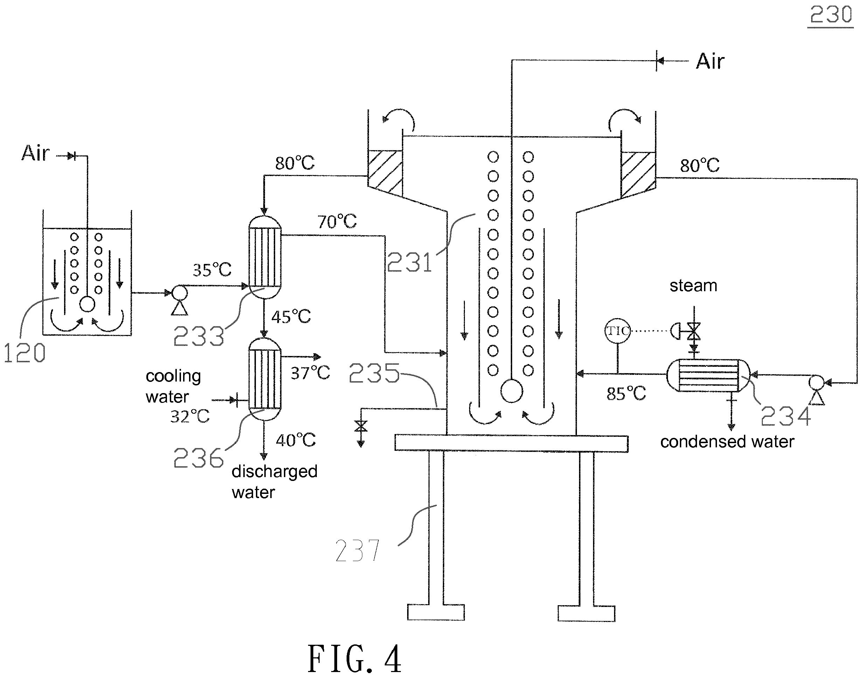

FIG. 4 is a schematic view of an aeration oxidation apparatus which is continuously operated according to another embodiment of the present invention. As shown in FIG. 4, the aeration oxidation device 230 includes an aeration oxidation tower 231, a heat exchanger 233, a heater 234, and a catalyst recovery line 235. The heat exchanger 233 communicates with the adjusting container 120 and the top of the aeration oxidation tower 231. The heat exchanger 233 receives the adjusted wastewater at about 35 °C from the adjusting container 120 and the oxidized wastewater at about 80 °C from the top of the aeration oxidation tower 131, and let the two kinds of wastewater do heat exchange with each other. As a result, the adjusted wastewater is heated to 70 °C and then introduced into the aeration oxidation tower 231, and the oxidized wastewater is cooled to 45°C as a discharged water. The heater 234 is in communication with the top of the aerated oxide tower 231. The heater 234 receives the oxidized wastewater at about 80°Cfrom the top of the aeration oxidation tower 131, heats it to about 85°C by use of an external steam, and then feeds it into the aeration oxidation tower 231. The aeration oxidation tower 231 passes air from its top to its bottom to oxidize the adjusted wastewater. The catalyst recycle line 235 is connected to the bottom of the aeration oxidation tower 231 for discharging the wastewater containing the catalysts and recycling the catalysts via a sedimentation tank. In one embodiment, the aeration oxidation tower 231 is supported by a tripod 237. In one embodiment, the aeration oxidation device 230 further includes a temperature controller TIC for controlling the temperature of the wastewater fed into the aeration oxidation tower 231.

In an embodiment, the aeration oxidation device 230 may further include another heat exchanger 236. The another heat exchanger 236 is used to cool the oxidized wastewater of about 45°C to 40°C with a cooling water and then discharge it as discharged water, and to heat the cooling water of about 32°C to about 37°C. In one embodiment, the discharged water can be introduced to the fixed bed oxidation adsorption device 110 for tertiary treatment of the wastewater.

### Example 3: Catalyst manufacturing method. The method of manufacturing the catalysts will be described below.

More specifically, the catalysts for removing COD are synthesized by a hydrothermal method at high pressure in the present of 5L of liquid containing ruthenium oxide, manganese dioxide and activated carbon. The catalyst manufacturing method according to an embodiment of the present invention includes the following steps S31-S39. Step S31: 1000ml of activated carbon was added into 3000ml of water at 60°C to be washed. The activated carbon is washed above three times, until the upper layer liquid was clarified. More specifically, 1000ml of activated carbon was added into 3000ml of water at 60°C. After being stirred, the liquid is stood for a while and then separated into an upper layer liquid and the lower layer liquid. The lower layer liquid is taken out to complete the first wash. Subsequently, 3000 ml of pure water was added into the obtained lower layer liquid, and the liquid was stirred at 60°C, and then is stood for a while and be separated into an upper layer liquid and a lower layer liquid. The lower layer liquid is taken out to complete the second wash. By analogy, the activated carbon is washed three times or more at 60 °C until the upper layer liquid is clear. Step S32: 3000ml of a sodium hydrogen carbonate solution having the concentration of 1% weight was added into the liquid lower layer obtained by step S31, then the lower layer liquid is stirred to adjust its pH value. Step S33: 20g of manganese sulfate is dissolved into 500ml of pure water, and the water with manganese sulfate is slowly dropped into the lower layer liquid for about 60 minutes. Since the precious metal is not easily attached to the activated carbon, it is necessary to use a transition metal such as magnesium, zinc, copper, manganese and tin to bond the precious metal such as ruthenium to the activated carbon via the transition metal. For purposes of the reducing the cost and simplifying the manufacturing procedures, it is preferably to choose manganese (that is, use of manganese sulfate as raw materials).

Step S34 : After completion of the titration, the temperature of the liquid of Step S33 is heated to 160°C for 60 minutes, and after completion of the reaction, the liquid is then cooled to 40°C. The liquid is then stood for a while and be separated into an upper layer liquid and a lower layer liquid. The upper layer liquid is removed. This step is called a crystal growth step. Step S35: 3000 ml of pure water is added into the lower layer liquid, and the liquid is washed three times or more at room temperature until an upper layer liquid is clear. Step S36: 3000ml of a sodium hydrogen carbonate solution having a concentration of 0.5% weight was added into the liquid obtained by step S35, and the lower layer liquid is stirred. Step S37: 3.0 g of ruthenium chloride is dissolved in 500ml of pure water, and the water with ruthenium chloride is slowly dropped into the lower layer liquid for about 60 minutes. Step S38: After completion of the titration, the temperature of the liquid of Step S37 is heated to 160°C for 60 minutes, and is then cooled to 40°C. The liquid is then stood for a while and be separated into an upper layer liquid and a lower layer liquid. The upper layer liquid is removed. Step S39: 3000ml of pure water is added into the lower layer liquid, and the liquid is washed three times or more at room temperature until an upper layer liquid is clear. Then, the catalysts for removing COD is prepared.

According to the above method for producing catalysts, the manganese is firstly grown on the activated carbon, and then the ruthenium is attached to the manganese so as to bond the ruthenium to the activated carbon via the manganese. In particular, ruthenium is not easily oxidized but is easily reduced, so ruthenium is oxidized as ruthenium oxide by manganese dioxide and then the ruthenium oxide is bonded to the OH group on the activated carbon.

The catalysts of the present embodiment can adsorb organic substances by using activated carbon, and then oxidize the organic substance with a precious metal. After the organic substance is oxidized to carbon dioxide and water, other organic substance can be adsorbed by the catalysts again. The reaction is repeated until the activity of the activated carbon disappears. As a result, better oxidation effect and speed can be obtained. In addition, when the activity of the activated carbon disappears, an activation solution or an activator may be added into the catalysts liquid to carry out the activation reaction, and after the activation is completed, the catalysts can be reactivated and can continuously be used.

### Example 4: The method of oxidizing the wastewater with high concentration of COD by use of 5L of catalysts containing ruthenium oxide, manganese oxide and activated carbon.

This embodiment includes the following steps S41-S45. Step S41: 500ml of catalysts containing ruthenium oxide, manganese oxide and activated carbon is placed in a reactor of 5L. 2L of wastewater with a low COD concentration of about 400ppm and 100ml of the activation liquid is added into the reactor. The pH value of the mixture liquid in the reactor is adjusted to between 7 and 9, and oxygen is introduced into the reactor. In the reactor, the pressure is raised to 5 kg/cm², and the temperature is raised to 80°C for 120 minutes. This step is an activation reaction of the catalysts to activate the catalysts. The activation solution for increasing the use life of the catalysts is a liquid containing ruthenium and interfacial agent. Step S42: after completion of the reaction, the liquid of Step S40 is cooled to 40°C and stood for 30 minutes; the upper layer liquid is removed; 30ml of the upper layer liquid may be extracted as a sample used to analyze the COD. Step S43: 2L of wastewater with a high COD concentration of about 4000ppm is added to the lower layer liquid. The pH of the wastewater is adjusted to between 7 and 9, oxygen is introduced to the reactor. In the reactor, the pressure is raised to 5 Kg/cm², and the temperature is raised to 80°C for 60 minutes. Step S44: After completion of the reaction, the wastewater is cooled to 40°C for 30 minutes, the upper layer liquid is removed, and 30ml of the upper layer liquid is extracted as sample used to do COD measurement. Step S45: Steps S43 and S44 are repeated dozens of times until the COD exceeds 2000 ppm or more, and then the activation reaction is performed in the present of catalysts containing ruthenium oxide, manganese oxide, and activated carbon.

### Example 5: The method of oxidizing the wastewater with middle concentration of COD by use of 5L of catalysts containing ruthenium oxide, manganese oxide and activated carbon.

This embodiment includes the following steps S51-S55. Step S51: 500ml of catalysts containing ruthenium oxide, manganese oxide and activated carbon is placed into a reactor of 5L. 2L of wastewater with a low COD concentration of about 200ppm and 100ml of the activation liquid is added into the reactor. The pH value of the mixture liquid in the reactor is adjusted to between 7 and 9; air is introduced into the reactor; and the temperature is raised to 80°C for 120 minutes. Step S52: after completion of the reaction, the liquid of Step S50 is cooled to 40°C and stood for 30 minutes; the upper layer liquid is removed; 30ml of the upper layer liquid is extracted as a sample used to analyze the COD. Step S53: 2L of wastewater with a middle COD concentration of about 2000ppm is added to the lower layer liquid. The pH of the wastewater is adjusted to between 7 and 9, air is introduced to the reactor. In the reactor, the temperature is raised to 80°C for 60 minutes. Step S54: After completion of the reaction, the wastewater is cooled to 40°C for 30 minutes, the upper layer liquid is removed, and 30ml of the upper layer liquid is extracted as sample used to do COD measurement. Step S55: Steps S53 and S54 are repeated dozens of times until the COD exceeds 800 ppm or more, and then the activation reaction is performed in the present of catalysts containing ruthenium oxide, manganese oxide, and activated carbon.

### Example 6: The method of oxidizing the wastewater with low concentration of COD by use of 5L of catalysts containing ruthenium oxide, manganese oxide and activated carbon.

This embodiment includes the following steps S61-S65. Step S61: 500ml of catalysts containing ruthenium oxide, manganese oxide and activated carbon is placed into a reactor of 5L. 2L of wastewater with a low COD concentration of about 80ppm and 100ml of the activation liquid is added into the reactor. The pH value of the mixture liquid in the reactor is adjusted to between 7 and 9; the mixture liquid is stirred and its temperature is raised to 80°C; air is introduced into the reactor for reaction for 120 minutes. Step S62: after completion of the reaction, the liquid of Step S60 is cooled to 40°C and stood for 30 minutes; the upper layer liquid is removed; 30ml of the upper layer liquid is extracted as a sample used to analyze the COD. Step S63: 2L of wastewater with a low COD concentration of about 800ppm is added to the lower layer liquid. The pH of the wastewater is adjusted to between 7 and 9; the mixture liquid is stirred and its temperature is raised to 80°C; air is introduced to the reactor for reaction for 60 minutes. Step S64: After completion of the reaction, the wastewater is cooled to 40°C is stood for 30 minutes. The upper layer liquid is removed, and 30ml of the upper layer liquid is extracted as sample used to analyze the COD. Step S65: Steps S63 and S64 are repeated dozens of times until the COD exceeds 300 ppm or more, and then the activation reaction is performed in the present of catalysts containing ruthenium oxide, manganese oxide, and activated carbon.

### Example 7: The method of oxidizing the wastewater with low concentration of COD by use of 5L of catalysts containing ruthenium oxide, manganese oxide and activated carbon.

This embodiment includes the following steps S71-S75. Step S71: 500ml of catalysts containing ruthenium oxide, manganese oxide and activated carbon is placed into a reactor of 5L. 2L of wastewater with a low COD concentration of about 30ppm and the bleaching water of 500ppm; and 100ml of the activation liquid is added into the reactor. The pH value of the mixture liquid in the reactor is adjusted to between 7 and 9; the mixture liquid is stirred and its temperature is raised to 80°C; air is introduced into the reactor for reaction for 120 minutes. Step S72: after completion of the reaction, the liquid of Step S70 is cooled to 40°C and stood for 30 minutes; the upper layer liquid is removed; 30ml of the upper layer liquid is extracted as a sample used to analyze the COD. Step S73: 2L of wastewater with a low COD concentration of about 300ppm is added to the lower layer liquid. The pH of the wastewater is adjusted to between 7 and 9; the mixture liquid is stirred and its temperature is raised to 80°C; air is introduced to the reactor for reaction for 60 minutes. Step S74: After completion of the reaction, the wastewater is cooled to 40°C is stood for 30 minutes. The upper layer liquid is removed, and 30ml of the upper layer liquid is extracted as sample used to analyze the COD. Step S75: Steps S73 and S74 are repeated dozens of times until the COD exceeds 150 ppm or more, and then the activation reaction is performed in the present of catalysts containing ruthenium oxide, manganese oxide, and activated carbon.

### Example 8: The adsorption and activation of the COD catalysts containing ruthenium oxide, manganese oxide and activated carbon.

This embodiment includes the following steps S81-S85. Step S81: 500ml of catalysts containing ruthenium oxide, manganese oxide and activated carbon is placed into a reactor of 5L. 2L of wastewater with a low COD concentration of about 80 ppm and the bleaching water of 500ppm; and 100ml of the activation liquid is added into the reactor. The pH value of the mixture liquid in the reactor is adjusted to between 7 and 9; the mixture liquid is stirred and its temperature is raised to 80°C; air is introduced into the reactor for reaction for 120 minutes. Step S82: after completion of the reaction, the liquid of Step S80 is cooled to 40°C and stood for 30 minutes; the upper layer liquid is removed; 30ml of the upper layer liquid is extracted as a sample used to analyze the COD. Step S83: 150ml of the activated COD catalysts containing ruthenium oxide, manganese oxide and activated carbon is filled in the oxidation adsorption towers 111-114 of the fixed bed oxidation adsorption device 110. The wastewater with the low COD concentration oxidized by the bleaching water is fed into the oxidation adsorption towers 111-114 and the pH is adjusted to between 6 and 7 for adsorption process. In the fixed bed oxidation adsorption device 110, the catalyst is recycled, the flow rate is about 900ml/hr and 30 ml per 900 ml is extracted as a sample used to analyze the COD. Step S84: When the COD exceeds the standard value, the activation of the catalysts containing ruthenium oxide, manganese oxide and activated carbon is performed. Through example 4 to example 8, the COD of the wastewater can be reduced from a high concentration (for example, 4000 ppm) to a low concentration of a standard value (for example, 50 ppm).

### Example 9: The method of oxidizing the wastewater with low concentration of COD and activation of the catalysts containing ruthenium oxide, manganese oxide and activated carbon catalysts.

This embodiment includes the following steps S91-S95. Step S91: 100L of the catalysts containing ruthenium oxide, manganese oxide and activated carbon is placed into a large reactor. 390L of wastewater with a low COD concentration of about 600ppm and the bleaching water of 1000ppm; and 10L of the activation liquid (which contains ruthenium and interfacial agent) is added into the reactor. The pH value of the mixture liquid in the reactor is adjusted to between 7 and 9; the temperature of the mixture liquid is raised to 80°C; air is introduced into the reactor for reaction for 120 minutes. Step S92: after completion of the reaction, the liquid of Step S90 is cooled to 40°C and stood for 30 minutes; the upper layer liquid is removed; 30ml of the upper layer liquid is extracted as a sample used to analyze the COD. Step S93: 2L of wastewater with a low COD concentration of about 300ppm is added to the lower layer liquid. The pH of the wastewater is adjusted to between 7 and 9; the mixture liquid is stirred and its temperature is raised to 80°C; air is introduced to the reactor for reaction for 60 minutes. Step S94: After completion of the reaction, the wastewater is cooled to 40°C is stood for 30 minutes. The upper layer liquid is removed, and 30ml of the upper layer liquid is extracted as sample used to analyze the COD. Step S95: Steps S93 and S94 are repeated dozens of times until the COD exceeds 300 ppm or more, and then the activation reaction of catalysts containing ruthenium oxide, manganese oxide, and activated carbon is performed.

According to an embodiment of the invention, an advanced oxidation process is provided, whose advantages include at least one of the following.
1. The reaction speed is about 0.5-2 hr, which can effectively shorten the processing time; in contrast, the processing time of a generally known biological pool requires about 24-48 hr, so the reaction speed of an embodiment of the present invention is more 20 times faster than that of known biological pool processing.
2, The construction space of equipment occupies a relatively small area, and the construction cost is relatively cheap.
3, There is no sludge output, and no need to deal with secondary pollutants.
4, Not only the COD of the wastewater is reduced, but also the wastewater is decolorized. In addition, ammonia nitrogen may also be reduced to below 1ppm.
5, The oxidation process is stable and easy to control. There is no problem that the COD of the wastewater after the treatment exceeds the standard.

In summary, the wastewater treatment method according to an embodiment of the present invention has a faster reaction speed than the known biological pool treatment, and its construction space is relatively small, and no sludge is generated. In contrast to the known wet oxidation treatment, the wastewater treatment method according to an embodiment does not need to be performed under high pressure and high temperature, and can be performed at a temperature of 80°C. In one embodiment, not only the COD of the wastewater is reduced, but also the wastewater is decolorized. In addition, ammonia nitrogen may also be reduced to below 1ppm.

## Claims

1. A wastewater treatment system, comprising:
liquid oxidation promoter;
a fixed bed oxidation adsorption device;
a plurality of catalysts comprising activated carbon, transition metal and precious metal, wherein the precious metal is bonded to the activated carbon via the transition metal;
an aeration oxidation device connected to the fixed bed oxidation adsorption device, wherein the catalysts, the liquid oxidation promoter, oxidizing gas, and wastewater having a COD concentration higher than a predetermined concentration are fed into the aeration oxidation device, and the COD in the wastewater is oxidized in the presence of the oxidizing gas and the catalysts so that the COD concentration of the wastewater is reduced to the predetermined concentration;
wherein,
the fixed bed oxidation adsorption device comprises a first oxidation adsorption tower for receiving the wastewater containing the predetermined concentration of the COD, and
the catalysts are fed into the first adsorption oxidation tower so that adsorption and oxidation reactions are performed on the wastewater to further reduce the COD concentration of the wastewater and to recycle the catalysts.

2. The wastewater treatment system according to claim 1 further comprising: an adjusting container, wherein the adjusting container comprising
a first inflow line for introducing the liquid oxidation promoter;
a second inflow line for introducing the wastewater having the COD concentration higher than the predetermined concentration;
a discharge line for discharging the adjusted wastewater; and
a body connected to the first inflow line, the second inflow line, and the discharge line for storing and treating the wastewater and mixing the liquid oxidation promoter into the wastewater,
wherein,
the aeration oxidation device is connected between the adjusting container and the fixed bed oxidation adsorption device, and the wastewater is introduced into the aeration oxidation device from the adjusting container.

3. The wastewater treatment system according to claim 2, wherein,
the aeration oxidation device further includes a sedimentation tank for recycling the catalysts.

4. The wastewater treatment system according to claim 1, wherein,
the transition metal is manganese,
the precious metal is ruthenium,
the oxidation gas is air, and
the liquid oxidation promoter is bleaching water.

5. The wastewater treatment system according to claim 1, wherein
the fixed bed oxidation adsorption device further comprises: a plurality of switch valves; a second oxidation adsorption tower; and a third oxidation adsorption tower, and
the switch valves are disposed between two of the first oxidation adsorption tower, the second oxidation adsorption tower and the third oxidation adsorption tower, so that when the adsorption and oxidation reaction is performed in the first and second oxidation adsorption towers, the regeneration reaction is performed in the third oxidation adsorption tower.

6. A wastewater treatment method comprising:
providing a plurality of catalysts, wherein the catalysts comprise activated carbon, transition metal and precious metal, wherein the precious metal is bonded to the activated carbon via the transition metal;
providing liquid oxidation promoter;
feeding the catalysts, the liquid oxidation promoter, oxidizing gas, and wastewater into an aeration oxidation device, wherein the COD concentration of the wastewater is higher than a predetermined concentration, and the COD in the wastewater is oxidized in the presence of the oxidizing gas and the catalysts so that the COD concentration of the wastewater is reduced to the predetermined concentration;
feeding the wastewater containing the predetermined concentration of the COD and the catalysts into a fixed bed oxidation adsorption device so that adsorption and oxidation reactions are performed on the wastewater to further reduce the COD concentration of the wastewater and the catalysts are recycled at the fixed bed oxidation adsorption device.

7. The wastewater treatment method according to claim 6 further comprising:
feeding a liquid oxidation promoter and the wastewater into an adjusting container and mixing the liquid oxidation promoter into the wastewater.

8. The wastewater treatment method according to claim 7 further comprising:
feeding the catalysts and an activating agent into a reactor so that the catalysts are activated.

9. The wastewater treatment method according to claim 6 further comprising:
recycling the catalysts at a sedimentation tank of the aeration oxidation device.

10. The wastewater treatment method according to claim 6, wherein,
the transition metal is manganese,
the precious metal is ruthenium,
the oxidation gas is air, and
the liquid oxidation promoter is bleaching water.
